# EUROPEAN PATENT APPLICATION

(11) **EP 4 653 170 A1**
(43) Date of publication of application: **26.11.2025**
(21) Application number: 24177276.3
(22) Date of filing: 22.05.2024
(51) Int. Cl.: B29B 7/00, B29B 7/28, B29B 7/72, B29B 7/74

(54) **SYSTEM AND METHOD FOR AUTOMATIC OPTIMIZATION OF COMPOUND VISCOSITY IN RUBBER MIXERS**

(71) Applicant: Siemens Aktiengesellschaft, 80333 München (DE)
(72) Inventor: Negi, Chandra Mohan Singh, 560076 Bangalore, Karnataka (IN); Bhadauria, Abhinandan, 560099 Bangalore, Karnataka (IN); Morabada, Sachin, 560062 Bengaluru, Karnataka (IN)
(74) Representative: Isarpatent

(57) **Abstract**

This patent application relates to a method and system for optimizing compound viscosity during the rubber mixing process utilizing a processing unit. The method involves receiving multiple parameters related to the mixing process and determining if the rotor torque is outside an optimal range through a specialized determination process. Upon identifying a deviation in rotor torque, the method computes an optimal rotor speed using an artificial intelligence algorithm that analyzes the rotor torque alongside the received parameters. The optimal rotor speed is then used to control the rubber mixer, thereby optimizing the compound viscosity of the rubber. This approach leverages advanced algorithmic processing to enhance the efficiency and effectiveness of rubber mixing operations, ensuring superior consistency and quality in the final rubber product.

## Description

The present invention pertains to the field of industrial process automation, and more particularly, to a method and system for automatically optimizing compound viscosity in rubber mixers using real-time monitoring and adaptive control strategies.

In the field of tire manufacturing, processes associate with mixing rubber compounds presents substantial difficulties. Predominantly, complications ensue from the operational dynamics of Banbury mixers, which are rubber mixers central to the fabrication of rubber tires. Should the rubber mixers not undergo precise calibration or consistent maintenance, their functionality might cause anomalies. Such anomalies may manifest as disparities in homogeneity of rubber compound mixing and thereby can precipitate considerable variations in tire quality and performance metrics. Additionally, rubber may deposit and accumulate on walls of the mixer. During the mixing phase, this accumulation of rubber compromises production output by diminishing an operational efficacy of the rubber mixers and potentially adulterating subsequent batches with contaminants.

Moreover, a mixing process causes thermal generation. Unless the thermal generation is controlled, such generated heat can induce degradation of rubber compounds, directly impairing a quality of the resultant tires. Further complicating matters, Banbury mixers have susceptibilities towards mechanical or electrical malfunctions, thereby magnifying operational challenges.

The aforementioned concerns, which span from irregular mixing and accumulation of materials to equipment malfunction and overheating, stress the intricacy of rubber mixing and underscore the indispensable requirement for accuracy, upkeep, and advancements in technology in tire production processes.

The object of the invention is achieved by a method for optimizing the compound viscosity of rubber which is mixed within a rubber mixer.

The method involves a series of steps that are intricately designed to enhance the efficiency and effectiveness of rubber mixing processes.

Initially, a processing unit receives a set of parameters associated with a rubber mixing process. The set of parameters comprises a temperature, an energy consumption, a rotor torque, and a desired compound viscosity, associated with the rubber that is mixed in the rubber mixer. The set of parameters are received from one or more sensors in the rubber mixer.

In one example, the set of parameters used to monitor the rubber mixing process comprises three parameters: a compound viscosity, an energy consumption, and a temperature of a rubber which is mixed in the rubber mixing process. The compound viscosity, which relates closely to the rotor torque, and an energy consumption, are both indirectly measured through power consumption and rotor speed, while a temperature of the rubber is measured by use of a temperature sensor of the one or more sensors. In one example, the rotor torque of the rubber mixers are measured by one or more torque sensors integrated into a drive system of the rubber mixer. Examples of temperature sensors include thermocouples and resistance temperature detectors. Examples of the one or more torque sensors, of the one or more sensors, include Strain Gauge Torque Sensors and Rotary Torque Sensors.

The method comprises implementing a rotor torque determination process, on the received set of parameters, to determine if the rotor torque of the rubber mixer deviates from an optimal range of rotor torque. A process, of determining that the rotor torque is within the optimal range of rotor torque, is a crucial process in a context of optimizing the compound viscosity of the rubber during the rubber mixing process. By determining the rotor torque of the rubber mixer, the processing unit is enabled to ascertain the compound viscosity of the rubber mixed in the rubber mixer. If the rotor torque of the rubber mixer is within the optimum range, then the compound viscosity of the rubber will be optimal.

The rotor torque is a continuously measurable quantity, providing real-time data that can be used to monitor and adjust the rubber mixer. Thus, the determination of the rotor torque enables implementation of a continuous feedback mechanism for immediate corrective actions if the rotor torque deviates from the optimal range of the rotor torque, thereby ensuring that the compound viscosity remains within desired limits throughout the rubber mixing process.

To implement the rotor torque determination process, the processing unit is configured to execute a plurality of steps.

In a first step of the plurality of steps, the processing unit is configured to determine the optimal range of rotor Torque.

The optimal range of the rotary torque is determined by the processing unit by implementing a threshold determination algorithm. The threshold determination algorithm is a computational procedure designed to analyze the received plurality of parameters of the rubber mixer, such as temperature, rotor speed, and material viscosity. In one example, the threshold determination algorithm uses a machine learning model which is configured to determine the optimal range of rotor torque on the basis of the plurality of parameters received from the rubber mixer. The machine learning model may be trained by application of supervised learning on a labelled dataset comprising historical data of a plurality of parameters associated with the rubber mixing process. The historical data of the plurality of parameters comprises temperature readings, rotor speeds, viscosity measurements, and energy consumption of the rubber mixer for a specific period of time. The historical data is labelled by one or more users based on user preferences to generate the labelled dataset. Advantageously, the machine learning model generates the optimal range of rotor torque such that the optimal range is optimized for the received plurality of parameters associated with the rubber mixer.

The machine learning model is configured to determine the optimal range of the rotor torque which maximizes efficiency and material consistency based on historical data and real-time sensor readings.

Examples of the machine learning model includes regression models, such as Linear Regression models, ridge regression models and lasso regression models which can provide a baseline understanding of relationships between the plurality of parameters, manage overfitting and handle multicollinearity effectively. The machine learning model can also be tree-based models like Decision Trees which offer a way to explore nonlinear relationships through hierarchical decision-making structures. The machine learning model may also be random Forests which use an ensemble of decision trees to reduce overfitting, and Gradient Boosting Machines incrementally correct previous errors, manage diverse data types and non-linear relationships.

In another example, the machine learning model may be models which are based on Recurrent Neural Networks (RNN) and Long Short-Term Memory networks (LSTM). The RNNs leverage memory capabilities to process sequences of inputs, which is essential for using past sensor data to predict future states. The LSTMs learning long-term dependencies, crucial for continuous process optimization. Additionally, the machine learning models may be convolutional Neural Networks which is adapted to capture spatial-temporal patterns in sequence data.

In a second step of the plurality of steps, the processing unit is configured to compare the rotor torque of the rubber mixer, with the optimal torque range. During the comparison the processing unit is configured to check if the rotor, torque falls within the determined optimal range of rotor torque.

At a third step of the plurality of steps, the processing unit is configured to determine whether the rotor torque is outside of the determined optimal range of rotor torque.

If the rotor torque is determined to be outside the determined optimal range of rotor torque, the processing unit is configured to predict an optimal rotor speed for the rubber mixer by application of an artificial intelligence algorithm on the rotor torque and the received plurality of parameters.

The artificial intelligence algorithm comprises one or more artificial intelligence models like linear regression based models, multilinear regression based models, decision trees based models, support vector machines based models, and neural network based models. The one or more artificial intelligence model are trained by use of a labelled dataset which comprises historical data associated with the rubber mixer. The historical data comprises one or more temperature readings, one or more rotor torque measurements, one or more rotor speed measurements, parameters associated with the rubber which is mixed such as material type, pressure, compound viscosity, etc. The artificial intelligence algorithm is a computational algorithm which predicts the optimal rotor speed. The artificial intelligence algorithm is configured to predict the optimal rotor speed for the rubber mixer to achieve the rotor torque which falls within the optimal range of rotor torque. The predicted optimal rotor speed, when applied to rotor of the rubber mixer, is predicted by the artificial intelligence algorithm to cause the rotor torque to fall within the determined optimal range of rotor torque. Thus, the processing unit is configured to suggest the optimal rotor speed for the rubber mixer. The method further comprises applying the artificial intelligence algorithm on the received plurality of parameters and the determined rotor torque to determine the optimal rotor speed for the rubber mixer.

Advantageously, usage of the artificial intelligence algorithm provide a robust framework for handling variability and unpredictability inherent in the rubber mixing process. The artificial intelligence algorithms are capable of learning complex patterns and relationships between the rotor torque and the compound viscosity, even when one or more relationships between them are non-linear and are influenced by many external and internal factors.

In one example, the processing unit is configured to receive unit, a training dataset comprising the historical data associated with the rubber mixer. The processing unit is further configured to apply a supervised training algorithm to train the artificial intelligence algorithm based on the received training dataset. The processing unit is further configured to determine the optimal rotor speed by application of the artificial intelligence algorithm on the plurality of parameters of the rubber mixer.

In one example, a number of inputs to the artificial intelligence algorithm is reduced by application of analysis method such as principal component analysis (PCA) and input selection on the received plurality of parameters. In one example the PCA, helps in simplify the received plurality of parameters by focusing on most significant features that explain variance in a dataset comprising the received plurality of parameters. In one example, the PCA is configured transform the plurality of parameters into a new set of uncorrelated variables, ordered by importance in explaining variability in the received plurality of parameters. Less important components, which contribute minimally to the variance, are then removed. The outputs from PCA are new variables that are linear combinations of the original inputs, effectively reducing a dimensionality and a complexity of the received plurality of parameters.

Further, the method includes controlling, by the processing unit, the rubber mixer based on the determined optimal rotor speed, thereby optimizing the compound viscosity associated with the rubber mixing process. The optimization of the compound viscosity helps in achieving a desired consistency and a quality in the rubber mixed in the rubber mixing process.

Additionally, the method further comprises determining, by the processing unit, an optimal temperature for the rubber mixing process. The processing unit is configured to apply the artificial intelligence algorithm on the determined rotor torque and the received plurality of parameters to determine the optimal temperature. The processing unit is further configured to control a temperature control mechanism to maintain the rubber mixing process at the determined optimal temperature.

In other words, the method implements a closed loop system to optimize the compound viscosity of rubber in the rubber mixing process. Advantageously, the present invention introduces the closed-loop control system for mixing rubber compounds in the rubber mixers. The closed loop system uses soft computing methods like neural networks and information theory to precisely control the compound viscosity of rubber in the rubber mixing process. The present invention combines characteristics of both the rubber which is being mixed and processing conditions such as temperature and rotor torque to ensure consistent quality in rubber production.

A notable feature of the present invention is continuous monitoring of the rotor torque, which is directly proportional to the compound viscosity. Thus real-time adjustments may be made on the rubber mixer. Thus, the present invention ensures that any deviation from a desired viscosity is quickly detected and corrected. Thus an integrity of the rubber mixing process is maintained and discrepancies that could affect the rubber is ironed out.

Moreover, by integrating the artificial intelligence algorithm to implement a predictive control system, the present invention promotes production of rubber compounds with uniform qualities.

The object of the present invention is achieved by a system for optimizing the compound viscosity of rubber which is mixed within a rubber mixer.

The system comprises one or more sensors and a processing unit. The one or more sensors are configured to capture a set of parameters associated with a rubber mixing process. The set of parameters are captured from the rubber mixer. In one example, the one or more sensors comprises one or more torque sensors to measure a rotor torque of the rubber mixers. The one or more sensors further comprises one or more temperature sensors. Examples of the one or more temperature sensors include thermocouples and resistance temperature detectors. Examples of the one or more torque include Strain Gauge Torque Sensors and Rotary Torque Sensors. The one or more sensors further comprises an energy consumption monitor, and a compound viscosity monitor associated with the rubber mixer.

Initially, the processing unit is configured to receive, from the one or more sensors, the set of parameters associated with the rubber mixing process. The set of parameters comprises a temperature, an energy consumption, a rotor torque, and a desired compound viscosity, associated with the rubber that is mixed in the rubber mixer. The set of parameters are received from one or more sensors in the rubber mixer.

In one example, the set of parameters used to monitor the rubber mixing process comprises three parameters: a compound viscosity, an energy consumption, and a temperature of a rubber which is mixed in the rubber mixing process. The compound viscosity, which relates closely to the rotor torque, and an energy consumption, are both indirectly measured through power consumption and rotor speed, while a temperature of the rubber is measured by use of a temperature sensor of the one or more sensors.

The processing unit is further configured to implement a rotor torque determination process, on the received set of parameters, to determine if the rotor torque of the rubber mixer deviates from an optimal range of rotor torque. A process, of determining that the rotor torque is within the optimal range of rotor torque, is a crucial process in a context of optimizing the compound viscosity of the rubber during the rubber mixing process. By determining the rotor torque of the rubber mixer, the processing unit is enabled to ascertain the compound viscosity of the rubber mixed in the rubber mixer. If the rotor torque of the rubber mixer is within the optimum range, then the compound viscosity of the rubber will be optimal.

The rotor torque is a continuously measurable quantity, providing real-time data that can be used to monitor and adjust the rubber mixer. Thus, the determination of the rotor torque enables implementation of a continuous feedback mechanism for immediate corrective actions if the rotor torque deviates from the optimal range of the rotor torque, thereby ensuring that the compound viscosity remains within desired limits throughout the rubber mixing process.

To implement the rotor torque determination process, the processing unit is further configured to implement to execute a plurality of steps.

In a first step of the plurality of steps, the processing unit is configured to determine the optimal range of rotor Torque.

The optimal range of the rotary torque is determined by the processing unit by implementing a threshold determination algorithm. The threshold determination algorithm is a computational procedure designed to analyze the received plurality of parameters of the rubber mixer, such as temperature, rotor speed, and material viscosity. In one example, the threshold determination algorithm uses a machine learning model which is configured to determine the optimal range of rotor torque on the basis of the plurality of parameters received from the rubber mixer. The machine learning model may be trained by application of supervised learning on a labelled dataset comprising historical data of a plurality of parameters associated with the rubber mixing process. The historical data of the plurality of parameters comprises temperature readings, rotor speeds, viscosity measurements, and energy consumption of the rubber mixer for a specific period of time. The historical data is labelled by one or more users based on user preferences to generate the labelled dataset. Advantageously, the machine learning model generates the optimal range of rotor torque such that the optimal range is optimized for the received plurality of parameters associated with the rubber mixer.

The machine learning model is configured to determine the optimal range of the rotor torque which maximizes efficiency and material consistency based on historical data and real-time sensor readings.

Examples of the machine learning model includes regression models, such as Linear Regression models, ridge regression models and lasso regression models which can provide a baseline understanding of relationships between the plurality of parameters, manage overfitting and handle multicollinearity effectively. The machine learning model can also be tree-based models like Decision Trees which offer a way to explore nonlinear relationships through hierarchical decision-making structures. The machine learning model may also be random Forests which use an ensemble of decision trees to reduce overfitting, and Gradient Boosting Machines incrementally correct previous errors, manage diverse data types and non-linear relationships.

In another example, the machine learning model may be models which are based on Recurrent Neural Networks (RNN) and Long Short-Term Memory networks (LSTM). The RNNs leverage memory capabilities to process sequences of inputs, which is essential for using past sensor data to predict future states. The LSTMs learning long-term dependencies, crucial for continuous process optimization. Additionally, the machine learning models may be convolutional Neural Networks which is adapted to capture spatial-temporal patterns in sequence data.

In a second step of the plurality of steps, the processing unit is configured to compare the rotor torque of the rubber mixer, with the optimal torque range. During the comparison the processing unit is configured to check if the rotor, torque falls within the determined optimal range of rotor torque.

At a third step of the plurality of steps, the processing unit is configured to determine whether the rotor torque is outside of the determined optimal range of rotor torque.

If the rotor torque is determined to be outside the determined optimal range of rotor torque, the processing unit is further configured to predict an optimal rotor speed for the rubber mixer by application of an artificial intelligence algorithm on the rotor torque and the received plurality of parameters.

The artificial intelligence algorithm comprises one or more artificial intelligence models like linear regression based models, multilinear regression based models, decision trees based models, support vector machines based models, and neural network based models. The one or more artificial intelligence model are trained by use of a labelled dataset which comprises historical data associated with the rubber mixer. The historical data comprises one or more temperature readings, one or more rotor torque measurements, one or more rotor speed measurements, parameters associated with the rubber which is mixed such as material type, pressure, compound viscosity, etc. The artificial intelligence algorithm is a computational algorithm which predicts the optimal rotor speed. The artificial intelligence algorithm is configured to predict the optimal rotor speed for the rubber mixer to achieve the rotor torque which falls within the optimal range of rotor torque. The predicted optimal rotor speed, when applied to rotor of the rubber mixer, is predicted by the artificial intelligence algorithm to cause the rotor torque to fall within the determined optimal range of rotor torque. Thus, the processing unit is configured to suggest the optimal rotor speed for the rubber mixer. The method further comprises applying the artificial intelligence algorithm on the received plurality of parameters and the determined rotor torque to determine the optimal rotor speed for the rubber mixer.

Advantageously, usage of the artificial intelligence algorithm provide a robust framework for handling variability and unpredictability inherent in the rubber mixing process. The artificial intelligence algorithms are capable of learning complex patterns and relationships between the rotor torque and the compound viscosity, even when one or more relationships between them are non-linear and are influenced by many external and internal factors.

In one example, the processing unit is configured to receive unit, a training dataset comprising the historical data associated with the rubber mixer. The processing unit is further configured to apply a supervised training algorithm to train the artificial intelligence algorithm based on the received training dataset. The processing unit is further configured to determine the optimal rotor speed by application of the artificial intelligence algorithm on the plurality of parameters of the rubber mixer.

In one example, a number of inputs to the artificial intelligence algorithm is reduced by application of analysis method such as principal component analysis (PCA) and input selection on the received plurality of parameters. In one example the PCA, helps in simplify the received plurality of parameters by focusing on most significant features that explain variance in a dataset comprising the received plurality of parameters. In one example, the PCA is configured transform the plurality of parameters into a new set of uncorrelated variables, ordered by importance in explaining variability in the received plurality of parameters. Less important components, which contribute minimally to the variance, are then removed. The outputs from PCA are new variables that are linear combinations of the original inputs, effectively reducing a dimensionality and a complexity of the received plurality of parameters.

The processing unit is further configured to control the rubber mixer based on the determined optimal rotor speed, thereby optimizing the compound viscosity associated with the rubber mixing process. The optimization of the compound viscosity helps in achieving a desired consistency and a quality in the rubber mixed in the rubber mixing process. In one example, the processing unit is configured to control the rubber mixer such that the rubber mixer achieves the determined optimal rotor speed. The processing unit is configured to control the rubber mixer by sending control signals to one of variable speed drives or variable frequency drives of the rubber mixer. Advantageously, the rubber mixer works at the rotor speed to generate the rotor torque which falls within the optimal range of rotor torque.

The processing unit is further configured to determine an optimal temperature for the rubber mixing process. The processing unit is further configured to apply the artificial intelligence algorithm on the determined rotor torque and the received set of parameters to determine the optimal temperature. The processing unit is further configured to control a temperature control mechanism to maintain the rubber mixing process at the determined optimal temperature.

In other words, the processing unit is further configured to implement a closed loop system to optimize the compound viscosity of rubber in the rubber mixing process. Advantageously, the present invention introduces the closed-loop control system for mixing rubber compounds in the rubber mixers. The closed loop system uses soft computing methods like neural networks and information theory to precisely control the compound viscosity of rubber in the rubber mixing process. The present invention combines characteristics of both the rubber which is being mixed and processing conditions such as temperature and rotor torque to ensure consistent quality in rubber production.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of a system for automatically optimizing compound viscosity in rubber mixers using real-time monitoring, according to an embodiment of the present invention;
- FIG 2: is a functional diagram of the system, such as those shown in FIG. 1, in which an embodiment of the present invention can be implemented; and
- FIG 3: is a process flowchart illustrating an exemplary method of automatically optimizing compound viscosity in rubber mixers using real-time monitoring, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

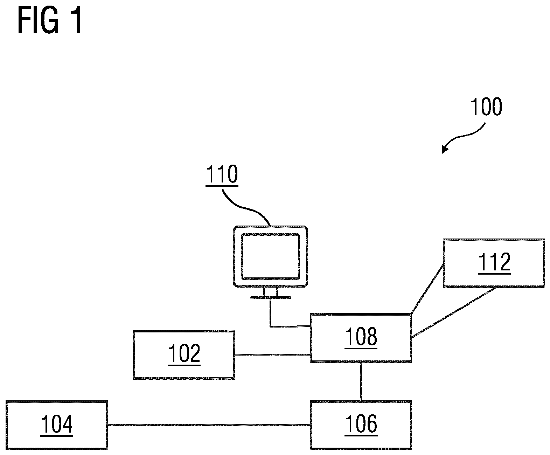

FIG 1 is a block diagram of a system 100 for automatically optimizing compound viscosity in rubber mixers using real-time monitoring, according to an embodiment of the present invention. In FIG 1, the system 100 includes one or more sensors 102, a rubber mixer 104, a drive system 106, an edge computing device 108, and a human machine interface 110. The edge computing device comprises a processing unit 112.

The one or more sensors 102 are configured to capture a set of parameters associated with a rubber mixing process happening in the rubber mixer 104.

The rubber mixer 104 is an industrial machine used for blending or mixing rubber with other ingredients such as fillers, oils, chemicals, and pigments to produce a uniform rubber compound. The rubber mixer 104 is essential in the rubber industry to achieve the specific properties required for different applications, from automotive tires to seals, gaskets, and rubber bands. Types of the rubber mixer 104 includes a Banbury mixer and an Open mill mixer. The Banbury mixer is characterized by an enclosed mixing chamber and one or more rotors. In the Banbury mixer, rubber and additives are fed into the enclosed mixing chamber, where the rubber and the additives are sheared between the one or more rotors and one or more walls of the enclosed mixing chamber. The open mill mixer comprises two parallel rotating rollers with a small gap between the two parallel rotating rollers. The small gap and a speed of the rollers is adjusted to control the mixing process.

The drive system 106 of the rubber mixer 104 is an integral component that provides necessary mechanical power to the rubber mixer 104. The drive system 106 comprises electric motors, a gearbox, a plurality of couplings, and Variable Speed Drives (VSDs) or Variable Frequency Drives (VFDs).

The edge computing device 108 is a hardware device which is configured to processes data at or near a source of data generation, rather than relying on a centralized data center. A proximity of the edge computing device 108 to data sources allows for quicker data processing and response times, reducing latency and bandwidth use. Edge devices are particularly valuable in scenarios where real-time processing and decision-making are critical, such as in autonomous vehicles, smart grids, and Internet of Things (IoT) applications.

Central to the edge computing device 108 is the processing unit 112, which is responsible for executing computing tasks. The processing unit 112 handles basic data processing and more complex algorithms required for tasks like real-time analytics.

Examples of the processing unit 112 in the edge computing device 108 include microprocessors and microcontrollers. Microprocessors are powerful and capable of handling sophisticated tasks with high computational needs. The Microprocessors are commonly found in more complex edge devices that require significant processing power, such as industrial robots or smart surveillance cameras. On the other hand, microcontrollers are used in simpler applications; they are less powerful but more energy-efficient, making them ideal for smaller, battery-operated devices like wearable health monitors and smart sensors.

By integrating these processing units, the edge computing device 108 can operate independently or with minimal reliance on distant data centers, allowing for faster and more efficient processing at a point of need.

The set of parameters are captured by the one or more sensors 102 from the rubber mixer 104. In one example, the one or more sensors 102 comprises one or more torque sensors to measure a rotor torque of the rubber mixer 104. The one or more sensors 102 further comprises one or more temperature sensors. Examples of the one or more temperature sensors include thermocouples and resistance temperature detectors. Examples of the one or more torque include Strain Gauge Torque Sensors and Rotary Torque Sensors. The one or more sensors further comprises an energy consumption monitor, and a compound viscosity monitor associated with the rubber mixer 104.

The processing unit 112 has an automation module. The automation module is a sophisticated software component that integrates with the processing unit 112.

When executed by the processing unit, the automation module causes the processing unit to streamline and optimize the rubber mixing operation. The automation module harnesses capabilities of artificial intelligence to enhance the efficiency and outcome of the rubber mixing process. The automation module causes the processing unit 112 to perform a plurality of steps to optimize the rubber mixing operation.

For example, initially, the processing unit 112 is configured to receive, from the one or more sensors 102, the set of parameters associated with the rubber mixing process. The set of parameters comprises a temperature, an energy consumption, a rotor torque, and a desired compound viscosity, associated with the rubber that is mixed in the rubber mixer 104. The set of parameters are received from one or more sensors 102 in the rubber mixer.

In one example, the set of parameters used to monitor the rubber mixing process comprises three parameters: a compound viscosity, an energy consumption, and a temperature of a rubber which is mixed in the rubber mixing process. The compound viscosity, which relates closely to the rotor torque, and an energy consumption, are both indirectly measured through power consumption and rotor speed, while a temperature of the rubber is measured by use of a temperature sensor of the one or more sensors 102.

The processing unit 112 is further configured to implement a rotor torque determination process, on the received set of parameters, to determine if the rotor torque of the rubber mixer 104 deviates from an optimal range of rotor torque. A process, of determining that the rotor torque is within the optimal range of rotor torque, is a crucial process in a context of optimizing the compound viscosity of the rubber during the rubber mixing process. By determining the rotor torque of the rubber mixer 104, the processing unit 112 is enabled to ascertain the compound viscosity of the rubber mixed in the rubber mixer 104. If the rotor torque of the rubber mixer is within the optimum range, then the compound viscosity of the rubber will be optimal.

The rotor torque is a continuously measurable quantity, providing real-time data that can be used to monitor and adjust the rubber mixer 104. Thus, the determination of the rotor torque enables implementation of a continuous feedback mechanism for immediate corrective actions if the rotor torque deviates from the optimal range of the rotor torque, thereby ensuring that the compound viscosity remains within desired limits throughout the rubber mixing process.

To implement the rotor torque determination process, the processing unit 112 is further configured to implement to execute a plurality of steps.

In a first step of the plurality of steps, the processing unit 112 is configured to determine the optimal range of rotor Torque.

The optimal range of the rotary torque is determined by the processing unit 112 by implementing a threshold determination algorithm. The threshold determination algorithm is a computational procedure designed to analyze the received plurality of parameters of the rubber mixer 104, such as temperature, rotor speed, and material viscosity. In one example, the threshold determination algorithm uses a machine learning model which is configured to determine the optimal range of rotor torque on the basis of the plurality of parameters received from the rubber mixer 104. The machine learning model may be trained by application of supervised learning on a labelled dataset comprising historical data of a plurality of parameters associated with the rubber mixing process. The historical data of the plurality of parameters comprises temperature readings, rotor speeds, viscosity measurements, and energy consumption of the rubber mixer for a specific period of time. The historical data is labelled by one or more users based on user preferences to generate the labelled dataset. Advantageously, the machine learning model generates the optimal range of rotor torque such that the optimal range is optimized for the received plurality of parameters associated with the rubber mixer 104.

The machine learning model is configured to determine the optimal range of the rotor torque which maximizes efficiency and material consistency based on historical data and real-time sensor readings.

Examples of the machine learning model includes regression models, such as Linear Regression models, ridge regression models and lasso regression models which can provide a baseline understanding of relationships between the plurality of parameters, manage overfitting and handle multicollinearity effectively. The machine learning model can also be tree-based models like Decision Trees which offer a way to explore nonlinear relationships through hierarchical decision-making structures. The machine learning model may also be random Forests which use an ensemble of decision trees to reduce overfitting, and Gradient Boosting Machines incrementally correct previous errors, manage diverse data types and non-linear relationships.

In another example, the machine learning model may be models which are based on Recurrent Neural Networks (RNN) and Long Short-Term Memory networks (LSTM). The RNNs leverage memory capabilities to process sequences of inputs, which is essential for using past sensor data to predict future states. The LSTMs learning long-term dependencies, crucial for continuous process optimization. Additionally, the machine learning models may be convolutional Neural Networks which is adapted to capture spatial-temporal patterns in sequence data.

In a second step of the plurality of steps, the processing unit is configured to compare the rotor torque of the rubber mixer, with the optimal torque range. During the comparison the processing unit is configured to check if the rotor, torque falls within the determined optimal range of rotor torque.

At a third step of the plurality of steps, the processing unit is configured to determine whether the rotor torque is outside of the determined optimal range of rotor torque.

If the rotor torque is determined to be outside the determined optimal range of rotor torque, the processing unit is further configured to predict an optimal rotor speed for the rubber mixer by application of an artificial intelligence algorithm on the rotor torque and the received plurality of parameters.

The artificial intelligence algorithm comprises one or more artificial intelligence models like linear regression based models, multilinear regression based models, decision trees based models, support vector machines based models, and neural network based models. The one or more artificial intelligence model are trained by use of a labelled dataset which comprises historical data associated with the rubber mixer. The historical data comprises one or more temperature readings, one or more rotor torque measurements, one or more rotor speed measurements, parameters associated with the rubber which is mixed such as material type, pressure, compound viscosity, etc. The artificial intelligence algorithm is a computational algorithm which predicts the optimal rotor speed. The artificial intelligence algorithm is configured to predict the optimal rotor speed for the rubber mixer to achieve the rotor torque which falls within the optimal range of rotor torque. The predicted optimal rotor speed, when applied to rotor of the rubber mixer, is predicted by the artificial intelligence algorithm to cause the rotor torque to fall within the determined optimal range of rotor torque. Thus, the processing unit is configured to suggest the optimal rotor speed for the rubber mixer. The method further comprises applying the artificial intelligence algorithm on the received plurality of parameters and the determined rotor torque to determine the optimal rotor speed for the rubber mixer.

Advantageously, usage of the artificial intelligence algorithm provide a robust framework for handling variability and unpredictability inherent in the rubber mixing process. The artificial intelligence algorithms are capable of learning complex patterns and relationships between the rotor torque and the compound viscosity, even when one or more relationships between them are non-linear and are influenced by many external and internal factors.

In one example, the processing unit 112 is configured to receive unit, a training dataset comprising the historical data associated with the rubber mixer 104. The processing unit 112 is further configured to apply a supervised training algorithm to train the artificial intelligence algorithm based on the received training dataset. The processing unit 112 is further configured to determine the optimal rotor speed by application of the artificial intelligence algorithm on the plurality of parameters of the rubber mixer 104.

In one example, a number of inputs to the artificial intelligence algorithm is reduced by application of analysis method such as principal component analysis (PCA) and input selection on the received plurality of parameters. In one example the PCA, helps in simplify the received plurality of parameters by focusing on most significant features that explain variance in a dataset comprising the received plurality of parameters. In one example, the PCA is configured transform the plurality of parameters into a new set of uncorrelated variables, ordered by importance in explaining variability in the received plurality of parameters. Less important components, which contribute minimally to the variance, are then removed. The outputs from PCA are new variables that are linear combinations of the original inputs, effectively reducing a dimensionality and a complexity of the received plurality of parameters.

The processing unit 112 is further configured to control the rubber mixer 104 based on the determined optimal rotor speed, thereby optimizing the compound viscosity associated with the rubber mixing process. The optimization of the compound viscosity helps in achieving a desired consistency and a quality in the rubber mixed in the rubber mixing process. In one example, the processing unit 112 is configured to control the rubber mixer 104 such that the rubber mixer 104 achieves the determined optimal rotor speed. The processing unit 112 is configured to control the rubber mixer 104 by sending control signals to one of variable speed drives or variable frequency drives of the rubber mixer 104. Advantageously, the rubber mixer 104 works at the rotor speed to generate the rotor torque which falls within the optimal range of rotor torque.

The processing unit 112 is further configured to determine an optimal temperature for the rubber mixing process. The processing unit 112 is further configured to apply the artificial intelligence algorithm on the determined rotor torque and the received set of parameters to determine the optimal temperature. The processing unit 112 is further configured to control a temperature control mechanism to maintain the rubber mixing process at the determined optimal temperature.

In other words, the processing unit 112 is further configured to implement a closed loop system to optimize the compound viscosity of rubber in the rubber mixing process. Advantageously, the present invention introduces the closed-loop control system for mixing rubber compounds in the rubber mixer 104. The closed loop system uses soft computing methods like neural networks and information theory to precisely control the compound viscosity of rubber in the rubber mixing process. The present invention combines characteristics of both the rubber which is being mixed and processing conditions such as temperature and rotor torque to ensure consistent quality in rubber production.

The human machine interface 110 may be a desktop computer, laptop computer, tablet, smart phone and the like. The human machine interface 110 is provided with an industrial control tool for inputting one or more parameters of the rubber mixer 104 to control the rubber mixer 104.

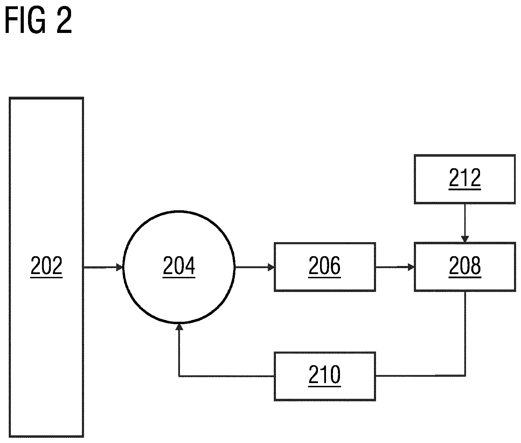

FIG 2 is a functional diagram of the system 100, such as those shown in FIG. 1, in which an embodiment of the present invention can be implemented. A plurality of factors 202 which affect a rubber mixing process 204 are shown. A set of parameters 206 associated with the rubber mixing process 204 is analyzed by an artificial intelligence algorithm 208. The artificial intelligence algorithm 208 is trained by use of training dataset 212. The artificial intelligence algorithm 208 determines at least one of an optimum rotor speed or an optimum temperature for the rubber mixing process 204. A closed control feedback loop 210 is used to control the rubber mixer based on at least one of the determined rotor speed or the determined optimum temperature.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an industrial control system 102 as is unique to the present disclosure or necessary for an understanding of the present disclosure is depicted and described. The remainder of the construction and operation of the industrial control system 102 may conform to any of the various current implementation and practices known in the art.

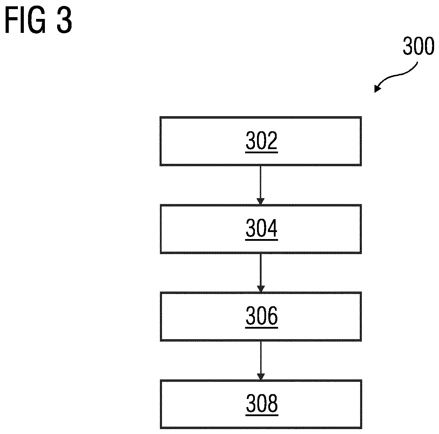

FIG 3 is a process flowchart illustrating an exemplary method 300 of automatically optimizing compound viscosity in rubber mixers using real-time monitoring, according to an embodiment of the present invention. Fig. 3 is explained in conjunction with FIG. 1 and 2.

The method 300 includes several steps executed by the processing unit 112. At 302, a set of parameters related to the rubber mixing process 204 is received by the processing unit 112. At step 304, a determination is made by the processing unit 112 that a rotor torque of the rubber mixer 104 is outside of an optimal range of rotor torque. The determination associated with the rotor torque is achieved through the implementation of a rotor torque determination process on the received set of parameters.

At step 306, an optimal rotor speed for the rubber mixer 104 is determined based on the determination that the rotor torque deviates from the optimal range of rotor torque. In case the processing unit 112 determines that the rotor torque is within the optimal range of rotor torque, the processing unit 112 is configured to notify a user that the compound viscosity is optimal. The optimal rotor speed is identified using an artificial intelligence algorithm, which processes both the measured rotor torque and the received set of parameters. At step 308, the rubber mixer 104 is then controlled based on this determined optimal rotor speed to enhance the compound viscosity integral to the rubber mixing process.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### List of references

1. the system 100
2. one or more sensors 102
3. a rubber mixer 104
4. a drive system 106
5. an edge computing device 108
6. a human machine interface 110
7. the processing unit 112
8. A plurality of factors 202
9. a rubber mixing process 204
10. A set of parameters 206
11. an artificial intelligence algorithm 208
12. closed control feedback loop 210
13. training dataset 212

## Claims

1. A method of optimizing compound viscosity of rubber in a rubber mixer, comprising:
a. receiving, by a processing unit, a plurality of parameters associated with a rubber mixing process;
b. determining that a rotor torque of a rubber mixer is outside of an optimal range of rotor torque by implementation of a rotor torque determination process on the plurality of parameters;
c. determining an optimal rotor speed for the rubber mixer based on the determination that the rotor torque is outside of the optimal range of rotor torque, wherein the optimal rotor torque is determined by an application of an artificial intelligence algorithm on the determined rotor torque and the plurality of parameters; and
d. controlling the rubber mixer based on the determined optimal rotor speed to optimize the compound viscosity associated with the rubber mixing process.

2. The method of claim 1, wherein the plurality of parameters comprises a temperature, an energy consumption, the rotor torque, and a desired compound viscosity associated with the rubber mixer.

3. The method of claim 1, wherein implementation of the rotor torque determination process comprises:
a. determining, by the processing unit, the optimal range of rotor torque by application of a threshold determination algorithm on the plurality of parameters;
b. comparing, by the processing unit, the rotor torque with the determined optimal range of rotor torque; and
c. determining, by the processing unit, that the rotor torque is outside of the optimal range of rotor torque.

4. The method of claim 1, further comprising:
determining, an optimal temperature for the rubber mixing process based on the application of the artificial intelligence algorithm on the determined rotor torque and the plurality of parameters; and controlling a temperature control mechanism to control the temperature of the rubber mixing process based on the determined optimal temperature and the plurality of parameters.

5. The method of claim 1, wherein the application of artificial intelligence algorithm comprises:
a. receiving, by the processing unit, a training dataset comprising historical data associated with the rubber mixer;
b. applying, by the processing unit, a supervised training algorithm to train a neural network based on the received training dataset;
c. determining, by the processing unit, the optimal rotor speed by application of the trained neural network on the plurality of parameters of the rubber mixer.

6. A system for optimizing compound viscosity of rubber in a rubber mixer, comprising:
a. one or more sensors configured to capture, from a rubber mixer, a plurality of parameters associated with a rubber mixing process;
b. a processing unit configured to:
a. receive the plurality of parameters associated with the rubber mixing process;
b. determine that a rotor torque of a rubber mixer is outside of an optimal range of rotor torque by implementing a rotor torque determination process on the plurality of parameters; and
c. determine an optimal rotor speed for the rubber mixer based on the determination that the rotor torque is outside of the optimal range of rotor torque, wherein the optimal rotor torque is determined by an application of an artificial intelligence algorithm on the determined rotor torque and the plurality of parameters; and
c. a control mechanism operatively connected to the rubber mixer and configured to control the rubber mixer based on the determined optimal rotor speed, thereby optimizing a compound viscosity associated with the rubber mixing process.

7. The system of claim 6, wherein the one or more sensors comprises a temperature sensor, an energy consumption monitor, a rotor torque sensor, and a desired compound viscosity monitor associated with the rubber mixer.

8. The system of claim 6, wherein the processing unit is further configured to:
a. determine the optimal range of rotor torque based on the plurality of parameters;
b. compare the rotor torque with the determined optimal range of rotor torque; and
c. determine that the rotor torque is outside of the optimal range of rotor torque.

9. The system of claim 6, wherein the processing unit is further configured to determine an optimal temperature for the rubber mixing process based on the application of the artificial intelligence algorithm on the determined rotor torque and the plurality of parameters.

10. The system of claim 6, further comprising a temperature control mechanism operatively connected to the rubber mixer and configured to control the temperature of the rubber mixing process based on the determined optimal temperature and the plurality of parameters.
